Europäisches Patentamt

European Patent Office

Office européen des brevets

(19)

(11) Veröffentlichungsnummer: **0 412 476 A2**

## (12) EUROPÄISCHE PATENTANMELDUNG

(21) Anmeldenummer: 90115063.1

(22) Anmeldetag: 06.08.90

(51) Int. Cl.5: **F04D 19/04, F04D 29/04**

(30) Priorität: **11.08.89 DE 3926577**

(43) Veröffentlichungstag der Anmeldung:
**13.02.91 Patentblatt 91/07**

(84) Benannte Vertragsstaaten:
**CH DE FR GB LI**

(71) Anmelder: **LEYBOLD AKTIENGESELLSCHAFT
Wilhelm-Rohn-Strasse 25
D-6450 Hanau am Main 1(DE)**

(72) Erfinder: **Kinzig, Volker
Tolnauerstrasse 2
D-6460 Gelnhausen 2(DE)**
Erfinder: **Schütz, Günter
Luisenstrasse 2A
D-5000 Köln 21(DE)**
Erfinder: **Stüber, Hans-Günter, Dr.
Moltkestrasse 86
D-5000 Köln 40(DE)**

(74) Vertreter: **Leineweber, Jürgen, Dipl.-Phys.
Nagelschmiedshütte 8
D-5000 Köln 40(DE)**

(54) **Vakuumpumpe mit einem Rotor und mit unter Vakuum betriebenen Rotorlagerungen.**

(57) Die Erfindung bezieht sich auf eine Vakuumpumpe (1) mit einem Rotor (4) und mit mindestens einem Lager (11, 12), das mit einem Schmiermittel versorgt wird und das sich während des Betriebs in einem unter Vakuum stehenden Raum befindet; um die Lagerlebensdauer zu erhöhen, wird vorgeschlagen, daß das Lager (11, 12) ein Keramiklager ist.

FIG. 1

EP 0 412 476 A2

## VAKUUMPUMPE MIT EINEM ROTOR UND MIT UNTER VAKUUM BETRIEBENEN ROTORLAGERUNGEN

Die Erfindung bezieht sich auf eine Vakuumpumpe mit einem Rotor und mit mindestens einem Lager, das mit einem Schmiermittel versorgt wird und das sich während des Betriebs in einem unter Vakuum stehenden Raum befindet.

Die Schmierung von Lagern, die während des Betriebs unter einem Unterdruck stehen, ist problematisch. Der Grund dafür liegt darin, daß die verwendeten Schmiermittel auf Dauer nicht vakuumbeständig sind und sich unabhängig davon, ob es sich um Schmierfette oder Schmieröle handelt, nach und nach verflüchtigen. Es besteht deshalb die Gefahr, daß eine Trennung der Kontaktpartner durch den Schmierstoff nicht immer gewährleistet ist. Die Folge davon sind verstärkte Reibungserscheinungen bzw. Kaltverschweißungen zwischen den Wälzkörpern und Lagerringen, was zu einem erhöhten Lagerverschleiß und damit zu reduzierter Lagerlebensdauer führt. Bei unter Vakuum betriebenen Lagern besteht nicht die Möglichkeit, zur Vermeidung eines Schmiermittelmangels mit Schmiermittelüberschüssen zu arbeiten, weil übermäßige Schmiermittelmengen zu erhöhter Schmiermitteldampfbildung führen. Es besteht die Gefahr, daß diese Schmiermitteldämpfe in das von der Pumpe erzeugte Vakuum gelangen und dieses verschlechtern oder gar verseuchen. Außerdem werden die Rotoren von Vakuumpumpen häufig mit sehr hohen Drehzahlen betrieben, so daß überschüssige Schmiermittelmengen zu einer zusätzlichen Lagerbelastung führen. Insbesondere bei Turbomolekularvakuumpumpen, deren Rotoren mit 60.000 Umdrehungen/Minute und mehr betrieben werden, treten die geschilderten Probleme auf. Man hat bisher versucht, diese Probleme durch eine exakte Schmiermittelzufuhr zu lösen. Beispiele für solche Lösungen sind in den deutschen Offenlegungsschriften 21 19 857, 23 09 665 und 29 47 066 beschrieben.

Der vorliegenden Erfindung liegt die Aufgabe zugrunde, eine Vakuumpumpe der eingangs genannten Art mit einem Lager auszurüsten, das für den Betrieb im Vakuum wesentlich besser geeignet ist.

Erfindungsgemäß wird diese Aufgabe dadurch gelöst, daß das oder die Lager der Vakuumpumpe, die sich während des Betriebs der Pumpe in einem unter Vakuum stehenden Raum befinden, Keramiklager sind. Bei einer Vakuumpumpe mit Keramiklagern ist vorteilhaft, daß die Lagertemperaturen im Vergleich zu den bisher verwendeten Stahllagern niedriger sind. Dieses bedeutet, daß weniger Schmiermittel sich verflüchtigt, so daß die Gefahr des Reißens des Schmierfilmes bei der bei Minimalschmierung, die insbesondere bei schnell drehenden Vakuumpumpen notwendig ist, wesentlich kleiner ist. Eine ausreichende Schmierung der Lager kann deshalb trotz Mangelschmierung eher sichergestellt werden als bei den bisher verwendeten Stahllagern. Außerdem treten die beschriebenen, mit mangelhafter Schmierung verbundenen Kaltverschweißungen nicht mehr auf. Diese verursachen in Stahllagern erhöhte Reibungs- und Gleiterscheinungen und damit erhöhte Lagertemperaturen und erhöhten Lagerverschleiß, was beim Einsatz keramischer Werkstoffe nicht der Fall ist. Insgesamt ergibt sich durch die Erfindung eine erhebliche Verlängerung der Lagerlebensdauer.

Eine weitere Verlängerung der Lebensdauer erreicht man bei Verwendung von Keramik als Wellenwerkstoff. Am Innenring ist der Gleitanteil im Verhältnis zur Rollbewegung wesentlich höher als am Außenring. Dadurch ist die Wärmeentwicklung am Innenring besonders hoch und die Wahrscheinlichkeit des Schmierfilmzusammenbruchs wesentlich höher als am Außenring. Durch Verwendung einer Keramikwelle mit unmittelbar darin eingelassenen Laufbahn nuten für die Wälzkörper (vorzugsweise Keramikkugeln) wird diese Wärmeentwicklung drastisch reduziert.

Gegenüber den Möglichkeiten, eine Stahl- oder Keramikwelle mit einem Keramik-Innenring zu verwenden, hat die Verwendung einer vollständig aus einem Keramikwerkstoff bestehenden Welle mit darin eingelassenen Laufbahnen für die Wälzkörper den Vorteil, daß eine Verbindung von separaten Bauteilen (Welle, Innenring) entfallen kann, welche insbesondere bei der Verwendung einer Stahlwelle mit einem Keramikinnenring wegen der unterschiedlichen Ausdehnungskoeffizienten Schwierigkeiten macht.

Vorteilhaft ist darüber hinaus, daß ein Keramiklager eine elektrische Isolation zwischen dem Rotor und dem Gehäuse der Vakuumpumpe bildet. Elektrische Ströme, die zu Lagerschäden führen, können deshalb nicht mehr durch das Lager strömen. Derartige Ströme treten auf, wenn eine Vakuumpumpe der hier betroffenen Art, insbesondere eine Turbomolekularpumpe, in einem Magnetfeld, beispielsweise in Kernkraftwerken oder in der Nähe der Magneten von Beschleunigern, betrieben werden muß.

Schließlich ist vorteilhaft, daß eine sichere Lagerschmierung es zuläßt, die hier betroffenen Vakuumpumpen mit höheren Drehzahlen zu betreiben, wodurch eine Verbesserung der Pumpeigenschaften, insbesondere des Saugvermögens, erreicht wird.

Eine vorteilhafte Weiterbildung der Erfindung besteht darin, daß das unter Vakuum betriebene Lager ein Wälzlager mit Wälzkörpern und Lagerringen (Lagerinnenring, Lageraußenring) ist und daß nur die Wälzkörper aus Keramik bestehen. Da Keramik-Wälzkörper leichter sind als Stahl-Wälzkörper, sind die Fliehkräfte und damit die inneren Lagerbeanspruchungen geringer. Die bei Spindellagern zur Einstellung eines bestimmten Druckwinkels notwendigen Anstellkräfte können geringer gewählt werden. Dieses bedeutet im Vergleich zu Stahllagern eine Senkung der Flächenpressung und der beim Abwälzen der Wälzkörper auftretenden Bohr- bzw. Gleitanteile.

Auch die insbesondere bei sehr hohen Drehzahlen schädlichen Druckwinkelschwankungen sind reduziert.

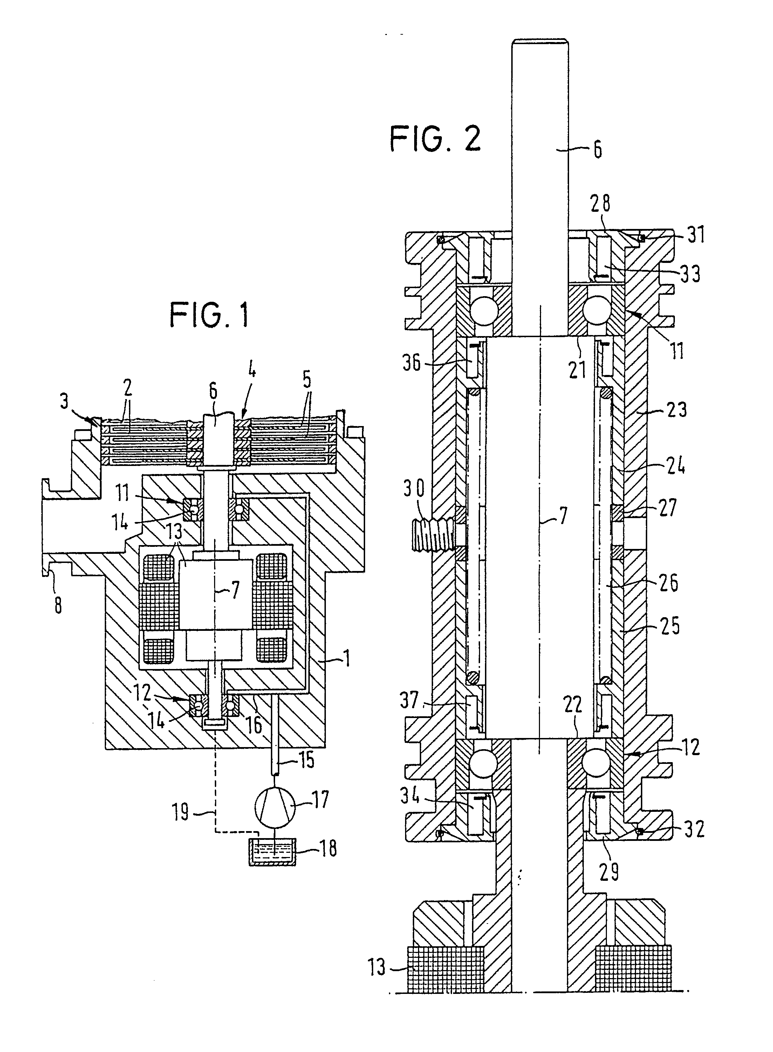

Weitere Vorteile und Einzelheiten der Erfindung sollen anhand von in den Figuren 1 und 2 dargestellten Ausführungsbeispielen erläutert werden. Es zeigen
- Figur 1 einen Teilschnitt durch eine Turbomolekularvakuumpumpe,
- Figur 2 einen Schnitt durch eine Lagerspindel und
- Figur 3 einen Teilschnitt durch eine Turbomolekularvakuumpumpe mit einer Spindellagerung.

Figur 1 zeigt einen Schnitt durch den unteren Teil einer Turbomolekularvakuumpumpe mit ihrem Gehäuse 1, dem mit den Statorschaufeln 2 ausgerüsteten Stator 3 und dem Rotor 4 mit den Rotorschaufeln 5. Bestandteil des Rotors 4 ist die Welle 6 mit ihrer Achse 7. An der Welle 6 sind die Rotorschaufeln 5 befestigt. Die Statorschaufeln 2 und die Rotorschaufeln 5 sind derart angestellt, daß eine Gasförderung vom nicht dargestellten Einlaß zum Auslaß 8 bewirkt wird.

Die Rotorwelle 6 ist im Gehäuse 1 der Turbomolekularpumpe mittels der Wälzlager 11 und 12 drehbar gelagert. Zwischen diesen Lagern befindet sich der Antriebsmotor 13. Da am Auslaßstutzen 8 eine Vorvakuumpumpe angeschlossen ist, steht auch der Raum, in dem sich die Lager 11, 12 und der Motor 13 befinden, während des Betriebs der Pumpe unter Vakuum.

Die Lager 11, 12 sind als Keramiklager ausgebildet, d. h. zumindest die Wälzkörper 14 dieser beiden Lager - vorzugsweise Kugeln - bestehen aus keramischem Werkstoff. Besonders geeignet sind Keramikteile, bei deren Herstellung ein Heißpreß- oder ein isostatischer Preß-Vorgang, vorzugsweise ebenfalls unter Hitze, angewendet wurde. Für die Verwendung in Wälzlagern sind derartige Keramikteile wegen ihrer Oberflächeneigenschaften besonders geeignet.

Die Wälzlager 11, 12 sind ölgeschmiert. Dazu ist ein Ölkreislauf vorgesehen, der das Ölleitungssystem 15, 16 umfaßt. Von einer Ölförderpumpe 17 wird diesem Leitungssystem dosiert Öl zugeführt, welches dem Ölvorratsgefäß 18 entnommen wird.

Überschüssiges Öl strömt durch die Ölrückführungsleitung 19 in den Vorratsbehälter 18 zurück.

Wegen des Einsatzes von Keramiklagern kann die den Lagern zugeführte Ölmenge sehr klein gehalten werden. Die Lagertemperatur bleibt während des Betriebs der Pumpe niedrig. Die sich verflüchtigende Ölmenge ist deshalb gering. Selbst wenn es einmal zu einem Schmierfilmabriß kommen sollte, dann sind die die Lebensdauer stark beeinträchtigenden Verschleißerscheinungen wegen der besonders guten Notlaufeigenschaften der Keramiklager nicht zu befürchten.

Die in Figur 2 dargestellte, für den Einsatz in Vakuumpumpen geeignete Lagerspindel weist die Spindellager 11, 12 auf, welche ebenfalls als Keramiklager ausgebildet sind. Die Innenringe der Lager 11, 12 stützen sich auf den Schultern 21, 22 der Welle 6 ab. Die jeweiligen Außenringe liegen in radialer Richtung der Spindelhülse 23 an. In axialer Richtung stützen sie sich auf die Hülsen 24, 25 ab. Diese sind in der Spindelhülse 23 geführt. Sie stehen unter der Wirkung der Druckfeder 26, welche die Lageranstellkräfte erzeugt. Mit Hilfe des Ringes 27 und der Schraube 30 ist das aus der Welle 6, den Lagern 11, 12, den Hülsen 24, 25 und der Feder 26 bestehende System innerhalb der Spindelhülse 23 fixiert.

Den stirnseitigen Abschluß der Spindelhülse 23 bilden Kappen 28 und 29, die mit Klemmringen 31, 32 fixiert sind. In den Kappen 28, 29 befinden sich weitgehend geschlossene, ringförmige Fettvorratsräume 33, 34, die eine langfristige Mangelschmierung der Lager 11, 12 sicherstellen. Auch die den Lagern 11, 12 zuge wandten Stirnseiten der Hülsen 24, 25 weisen derartige Fettvorratsräume 36, 37 auf.

Ein besonderer Vorteil der Ausbildung der Lager 11, 12 als Keramiklager liegt darin, daß die von den Keramikwälzkörpern erzeugten Fliehkräfte kleiner sind als die von Stahlwälzkörpern erzeugten Fliehkräfte. Es ist deshalb möglich, die Lageranstellkräfte kleiner zu halten, d. h. die Druckfeder 26 schwächer zu wählen. Die beim Wälzvorgang der Wälzkörper auf den Lagerringen auftretenden Reibanteile sind dadurch geringer, was eine Verlängerung der Lebensdauer zur Folge hat.

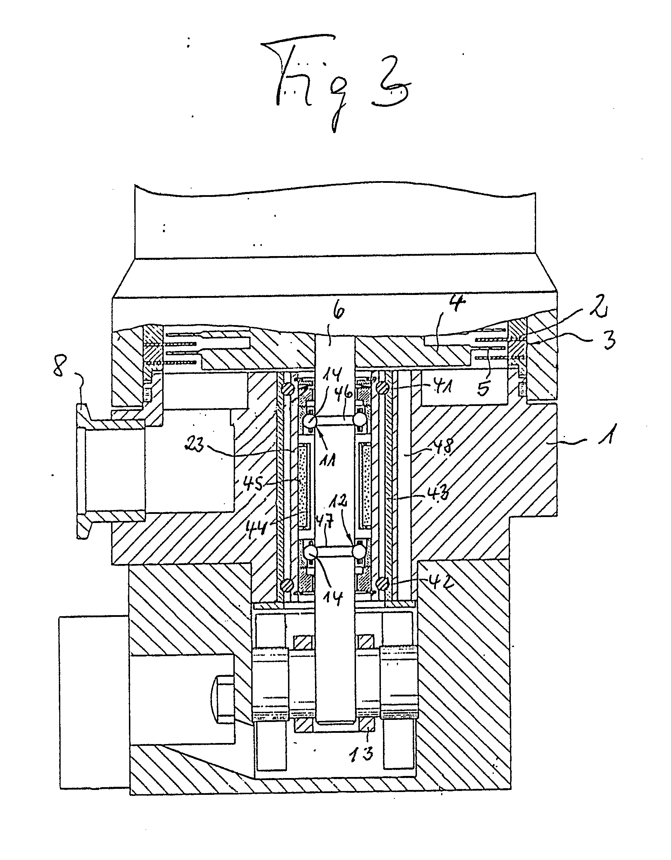

Figur 3 zeigt die Ausführungsform einer Turbomolekularvakuumpumpe, bei der sich der Rotor 4 über die Welle 6 in den Lagern 11, 12 abstützt, die ebenfalls Bestandteil einer Spindellagerung sind. Die Außenringe der Lager 11, 12 liegen der Spindelhülse 23 an, die sich ihrerseits über die O-Ringe 41, 42 und eine Lagerhülse 43 im Gehäuse 1 abstützt. Zwischen den Lagern 11, 12 ist an der Spindelhülse 23 ein im wesentlichen zylindrisches Schmiermittelreservoir 44 befestigt. Dieses ist mit schmiermittelgetränktem Material 45 gefüllt.

Die Welle 6 der Ausführungsform nach Figur 3 besteht aus einem Keramikwerkstoff. Sie weist Ansätze oder Abstufungen zur Abstützung von Lagerrinnenringen nicht auf. Sie ist selbst mit den Nuten 46, 47 ausgerüstet, die Laufbahnen für die Kugeln 14 bilden.

Parallel zur Spindellagerung ist noch eine das Gehäuse 1 durchsetzende Bohrung 48 vorgesehen, die den Motorraum mit der Vorvakuumseite der Pumpe verbindet. Ohne diese Bohrung würde der Motorraum durch die Lagerung hindurch evakuiert, was ein schädliches Mitreißen von Schmiermitteln zur Folge hätte.

Die Anwendung der Erfindung ist immer dann sinnvoll, wenn ein schmiermittelversorgtes Wälzlager unter Vakuum betrieben werden muß. Als Schmiermittel können Mineral- oder Synthetiköle, kohlenwasserstofffreie Öle (beispielsweise perfluorierte Polyäther) oder Fette auf vorstehend erwähnter Grundbasis eingesetzt werden. Gerade kohlenwasserstofffreie Schmiermittel müssen häufig in der Vakuumtechnik eingesetzt werden, und zwar dann, wenn das zu fördernde Gas oder der zu evakuierende Rezipient von Kohlenwasserstoffen völlig freigehalten werden muß. Gegenüber anderen Schmierstoffen haben perfluorierte Polyäther schlechtere Schmiereigenschaften, u. a. auch deshalb, weil sie zu einer Eisenfluorid-Bildung führen, so daß die Gefahr von Schmierfilmdurchbrüchen in höherem Maße besteht. Infolge der erfindungsgemäßen Verwendung von Keramiklagern führen diese Schmierfilmdurchbrüche nicht mehr zu vorzeitigen Lagerschäden. Sind die Keramiklager als Wälzlager ausgebildet, dann sollten zumindest die Wälzkörper aus Keramik bestehen. Auch bei einer als Lagerspindel (vgl. Fig. 2) ausgebildeten Lagerung sollten mindestens die Wälzkörper aus Keramik bestehen. Ein separater Lagerinnenring ist nicht erforderlich, wenn die Spindel integriert ausgebildet ist, d. h. wenn die Welle selbst mit die Kugellaufbahnen bildenden Rillen ausgerüstet ist und vorzugsweise selbst aus einem Keramikwerkstoff besteht. Bei Gleitlagern muß mindestens einer der beiden Lagerpartner aus Keramik bestehen.

## Ansprüche

1. Vakuumpumpe (1) mit einem Rotor (4) und mit mindestens einem Lager (11, 12), das mit einem Schmiermittel versorgt wird und das sich während des Betriebs in einem unter Vakuum stehenden Raum befindet, dadurch gekennzeichnet , daß das Lager (11, 12) ein Keramiklager ist.

2. Vakuumpumpe nach Anspruch 1, dadurch gekennzeichnet , daß das Lager (11, 12) ein Wälzlager mit Wälzkörpern (14) und Lagerringen (Lagerinnenring, Lageraußenring) ist und daß zumindest die Wälzkörper aus Keramik bestehen.

3. Vakuumpumpe nach Anspruch 2, dadurch gekennzeichnet , daß das Lager als Spindellager mit von Kugeln gebildeten Wälzkörpern ausgebildet ist.

4. Vakuumpumpe nach einem der vorhergehenden Ansprüche, dadurch gekennzeichnet , daß das Schmiermittel ein perfluorierter Polyäther ist.

5. Vakuumpumpe nach einem der vorhergehenden Ansprüche, dadurch gekennzeichnet , daß der Rotor mittels einer Lagerspindel gehaltert ist und daß die Lager (11, 12) als Spindellager ausgebildet sind.

6. Vakuumpumpe nach Anspruch 5, dadurch gekennzeichnet , daß zur Erzeugung der Lageranstellkräfte zwei in einer Spindelhülse geführte Hülsen (24, 25) sowie eine Druckfeder (26) vorgesehen sind und daß die den Lagern (11, 12) zugewandten Stirnseiten der Hülsen (24, 25) mit ringförmigen Fettvorratsräumen ausgerüstet sind.

7. Vakuumpumpe nach Anspruch 6, dadurch gekennzeichnet , daß zum Abschluß der beiden Stirnseiten der Spindelhülse Kappen (28, 29) vorgesehen sind, die ebenfalls Fettvorratsräume (33, 34) aufweisen.

8. Vakuumpumpe nach einem der vorhergehenden Ansprüche, dadurch gekennzeichnet , daß sie als Turbomolekularvakuumpumpe ausgebildet ist.

9. Vakuumpumpe nach einem der vorhergehenden Ansprüche, dadurch gekennzeichnet , daß sich der Rotor (4) über einer Welle (6) im Keramiklager (11, 12) abstützt und daß die Welle (6) ebenfalls aus Keramik besteht.

10. Vakuumpumpe nach Anspruch 9, dadurch gekennzeichnet , daß die Welle (6) mit einer die Walzkörperlaufbahn bildenden Nut (46, 47) ausgerüstet ist.

# FIG. 2

# FIG. 1

Fig 3